# EUROPEAN PATENT SPECIFICATION

(11) **EP 2 174 782 B1**
(45) Date of publication and mention of the grant of the patent: **12.10.2011**
(21) Application number: 10151588.0
(22) Date of filing: 17.08.2007
(51) Int. Cl.: B32B 25/08, B32B 27/20, B41N 10/04

(54) **Printing Blanket Including a Barrier Layer**
Drucktuch mit Sperrschicht
Blanchet d'imprimerie comprenant une couche barrière

(30) Priority: 17.08.2006 US 838341 P; 16.08.2007 US 839831
(43) Date of publication of application: 14.04.2010
(62) Divisional of application: 07814217.1
(73) Proprietor: Day International, Inc., Dayton, OH 45402 (US)
(72) Inventor: McClean, Michael, Etowah, NC 28729 (US); Arrington, Noel, Waynesville, NC 28786 (US); Czerner, Richard, Weaverville, NC 28787 (US)
(74) Representative: Caldwell, Judith Margaret

(56) References cited:
- DE-A1-102004 037 904
- DATABASE WPI Week 200645 Thomson Scientific, London, GB; AN 2006-438110 XP002461660 -& JP 2006 159822 A (TOPPAN PRINTING CO LTD) 22 June 2006 (2006-06-22)

## Description

The present invention relates to the use of a printing blanket including a barrier layer therein, and more particularly, to the use of a barrier layer under the printing surface of a printing blanket or printing sleeve structure to reduce permeation of chemicals and other liquids into the underlying blanket layers.

One of the most common commercial printing processes is offset lithography. In this printing process, an ink image is offset from a printing plate to a rubber-surfaced printing blanket or sleeve mounted on a blanket cylinder. The ink image is then transferred to a substrate such as paper. The printing blanket or sleeve is typically reinforced with a number of layers such as fabric layers and compressible layers which are bonded together, typically with adhesives.

Printing blankets and sleeves used in offset printing processes are exposed to a variety of chemicals, including water, fountain solutions, wash chemicals, and inks. For example, water, fountain solutions, and inks are required to "wet" the blanket surface sufficiently to facilitate proper transfer of the printing image from the plate to the blanket and from the blanket to the surface that carries the final image. Wash solutions are used to remove inks from the blanket surface during cleanup between different printing jobs.

During the printing and/or cleanup processes, such chemicals often penetrate the surfaces of the printing blankets, and in some instances, penetrate further into the layers of the blanket structure, such as into the fabric layers, compressible layers, and adhesive layers. Such penetration may cause localized increases in thickness (swelling) of the blanket, which can result in a number of printing problems including poor image transfer, poor web feeding characteristics, and poor printing registration.

In addition, chemical penetration can cause the blanket to fail prematurely due to reduction in adhesion between layers caused by the chemicals. Failure may also occur because swelling of the blanket introduces additional mechanical stresses in the blanket components as they are compressed repeatedly by the plate and impression cylinder nips during printing. Failure can also occur due to the accumulation of fluids in voids within the fabric and compressible layers. Such fluids are subjected to severe hydraulic forces while,passing through the nips, which can result in further mechanical deterioration of the layers, causing blankets to fail due to the formation of blisters, worming, and delamination.

Accordingly, it would be desirable to maintain the compatibility of chemicals with the blanket surface while being able to reduce or eliminate chemical penetration beyond the printable face layer. Attempts have been made to provide a barrier layer to reduce the wicking of fluids from the base structure into the interior layers of the blanket. See, for example, Pinkston et al., U.S. Patent No. 4,015,046, which teaches the use of a barrier layer comprising acrylonitrile positioned adjacent to a fabric reinforcing layer. However, acrylonitrile does not always provide sufficient protection from chemical permeation as it tends to swell in the presence of certain chemicals found in inks and wash solutions. Other printing blankets comprising a barrier layer are disclosed in DE 10 2004 037 904 A and in JP 2006 159822 A.

There is still a need in the art to reduce or eliminate chemical penetration into the underlying layers of a printing blanket or sleeve.

The present invention meets that need by providing a barrier layer which functions to substantially reduce or eliminate penetration of printing chemical, inks, wash solutions, and other liquids below the image transfer surface layer of a printing blanket or sleeve.

According to one aspect of the present invention, a printing blanket for reducing penetration of liquids into the interior thereof during use as defined in present claim 1 is provided.

In one embodiment of the invention, the printing blanket includes at least one reinforcing layer over the base ply. The reinforcing layer may comprise fabric. In another embodiment of the invention, the printing blanket further includes a compressible layer over the base ply.

In another embodiment of the invention, the barrier layer comprises a polymer or rubber coated with a metal. In another embodiment, the barrier layer comprises a polymer or rubber coated with a layer of silicon oxide.

In yet another embodiment, the filler is selected from mica, silica, clay, talc and alumina particles. The filler may also be in the form of particles which are coated with a silane or fluorocarbon.

In another embodiment of the invention, the barrier layer comprises a polymer or rubber layer including an absorbent material therein. The absorbent material may comprise silica, alumina, carbon black, molecular sieves and desiccants.

In yet another embodiment, the barrier layer comprises a compressible layer which has been chemically treated to prevent penetration of liquids therethrough. The chemical treatment may comprise a fluorocarbon treatment.

The printing blanket may also include more than one barrier layer. In one embodiment, the printing blanket includes at least two adjacent barrier layers.

The barrier layer may have a thickness of between about 0.002 inches to about 0.015 inches (about 0.05 to about 0.38 mm).

In one embodiment of the invention, the printing blanket comprises a base ply; a first reinforcing layer over the base ply, a compressible layer over the reinforcing layer, a second reinforcing layer over the compressible layer, and a printable surface layer over the second reinforcing layer comprising first and second surfaces. At least one barrier layer is positioned against the second surface of the print layer which prevents the penetration of liquids into the layers of the printing blanket beyond the print layer. The layers of the blanket may be adhered together with an adhesive.

Accordingly, it is a feature of the present invention to provide a printing blanket including a barrier layer which reduces the penetration of chemicals and other liquids into the interior of the blanket during use. Other features and advantages of the invention will be apparent from the following description, the accompanying drawings, and the appended claims.
Fig. 1 is a cross-sectional view illustrating one embodiment of the printing blanket of the present invention;
Fig. 2 is a cross-sectional view illustrating another embodiment of the printing blanket; and
Fig. 3 is a cross-sectional view illustrating another embodiment of the printing blanket.

The printing blanket of the present invention which includes a barrier layer therein provides protection against a variety of liquids such as solvents, chemicals, water, fountain solutions, inks, and the like which may come into contact with the blanket during use. The barrier layer functions to reduce or substantially eliminate penetration of such chemicals beyond the print layer of the blanket, thus preserving blanket performance and durability. By positioning the barrier layer against the second surface of the print layer, all underlying layers are protected from the penetration of liquids into the blanket.

The barrier layer of the present invention should preferably exhibit a permeability to liquids which is 20 to 100 times less than that of the layers comprising the printing face or other layers of the blanket, for example, nitrile or nitrile/polysulfide layers.

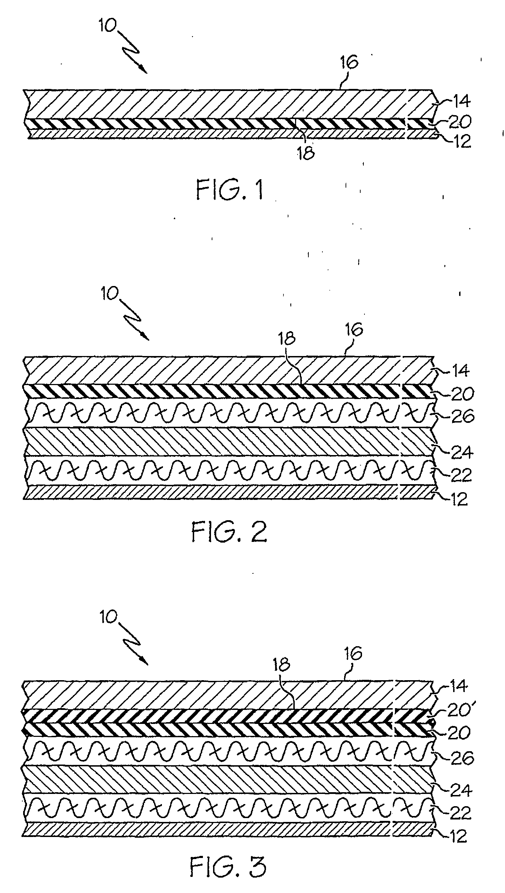

Fig. 1 illustrates one embodiment of the printing blanket 10 of the present invention which includes a base ply 12, a print layer 14 having first and second surfaces 16 and 18, respectively, and a barrier layer 20 positioned between the print layer and base ply, which is against (i.e., directly in contact with) the second surface 18 of the print layer 14. It should be appreciated that the printing blanket may be provided in the form of a flat blanket designed to be wrapped around a blanket cylinder and secured thereto, or it may be in the form of a printing sleeve.

The base ply may be comprised of fabric, and may also be comprised of metal, polymer, or fiberglass materials.

The barrier layer comprises polyamide, polyester, polyolefin, polyurethane, or rubber materials which are formulated to resist penetration by chemicals such as ethylene/propylene rubber, fluorocarbon rubber, and butyl rubber. The synthetic polymer or natural rubber barrier layer may be coated with a layer of silicon oxide to provide hydrophobic properties.

Alternatively, the barrier layer may comprise a polymer or rubber coated with a metal.

The barrier layer includes one or more fillers therein comprising a material having a large aspect ratio greater than 1 such as mica, talc, or other minerals which form "platelets" which are oriented parallel to the surface of the barrier layer, aiding in preventing permeation. Examples of suitable fillers include mica, silica, clay, talc and alumina particles. Such filler particles may also be coated with a silane or fluorocarbon to provide hydrophobic properties to the barrier layer such that the absorption of liquids such as water and polar chemicals is reduced.

The barrier layer may also comprise a synthetic polymer or natural rubber including an absorbent material therein. Suitable absorbent materials include alumina, carbon black, super absorbent polymer (SAP), silica gel, molecular sieves, desiccants, or other high surface area particulates.

It should be appreciated that one or more of these additives may be used with the barrier layer.

The barrier layer may also comprise a compressible layer which has been coated or chemically treated to resist chemical penetration. Such chemical treatment, may comprise, for example, a fluorocarbon treatment. Suitable compressible layers are known in the art and may be comprised of, for example, an elastomeric material having a cellular structure or containing microspheres.

The barrier layer(s) may have a thickness of between about 0.002 inches to about 0.015 inches (about 0.05 to about 0.38 mm).

Fig. 2 illustrates another embodiment of the invention in which the printing blanket comprises a base layer 12, a first reinforcing layer 22 over the base ply, a compressible layer 24 over the reinforcing layer, a second reinforcing layer 26 over the compressible layer, a printable surface layer 14 over the second reinforcing layer; and a barrier layer 20 positioned against the second surface 18 of the printing layer 14.

The reinforcing layers may be comprised of fabric and may also comprise polymers or polymer/fabric composite materials.

If desired, the barrier layer may comprise a reinforcing layer, e.g., replacing second reinforcing layer 26, such that it functions to reduce liquid penetration as well as provide the proper support and mechanical properties typically provided by a reinforcing layer. In an embodiment in which the barrier layer comprises a reinforcing layer, the reinforcing layer is preferably comprised of a polyester film, nylon film, or a polyurethane film optionally treated with a fluorocarbon, polyvinylidene chloride, silicon oxide or a metal layer.

One or more barrier layers may be used the printing blanket construction. Fig. 3 illustrates an embodiment of the invention in which the printing blanket includes two adjacent barrier layers 20, 20'. In this embodiment, the barrier layers may comprise the same or different materials.

It should be appreciated that in all embodiments of the blanket construction, adhesive layers (not shown) may be used between the layers to adhere them together. The barrier layer reduces permeation of liquids into the adhesive layers of the blanket as well as the other functional layers.

Having described the invention in detail and by reference to preferred embodiments thereof, it will be apparent that modifications and variations are possible without departing from the scope of the invention.

## Claims

1. A printing blanket comprising:
at least one base ply;
a print layer over said base ply having a first surface and a second surface, said first surface adapted to receive a printable image thereon; and
at least one barrier layer positioned against said second surface of said print layer and adapted to reduce the permeation of liquids into said printing blanket beyond said print layer; said barrier layer'selected from the group consisting of nylon, polyester, polyolefins, polyurethane, ethylene/propylene rubber, fluorocarbon rubber, and butyl rubber; wherein said barrier layer includes at least one filler therein in the form of particles having a large aspect ratio greater than 1 and oriented substantially parallel to the surface of said barrier layer.

2. The printing blanket of claim 1 further including at least one reinforcing layer over said base ply.

3. The printing blanket of claim 2 wherein said reinforcing layer comprises fabric.

4. The printing blanket of claim 1 further including a compressible layer over said base ply.

5. The printing blanket of claim 1 wherein said barrier layer has been coated with a layer of silicon oxide.

6. The printing blanket of claim 1 wherein said filler is selected from mica, talc, silica, clay, and alumina.

7. The printing blanket of claim 1 wherein said filler has been coated with a silane or fluorocarbon.

8. The printing blanket of claim 1 wherein said barrier layer includes an absorbent material therein selected from silica, alumina, carbon black, molecular sieves and desiccants.

9. The printing blanket of claim 1 wherein said barrier layer comprises a compressible layer which has been chemically treated to prevent penetration of liquids therethrough.

10. The printing blanket of claim 9 wherein said chemical treatment comprises a fluorocarbon treatment.

11. The printing blanket of claim 1 wherein said barrier layer has been coated with a metal.

12. The printing blanket of claim 1 including at least two adjacent barrier layers.

13. The printing blanket of claim 1 wherein said barrier layer has a thickness of between 0.05 mm to 0.38 mm (0.002 inches to 0.015 inches).

## Patentansprüche

1. Drucktuch, das Folgendes umfasst:
wenigstens eine Basislage;
eine Druckschicht über der genannten Basislage mit einer ersten Oberfläche und einer zweiten Oberfläche, wobei die genannte erste Oberfläche so ausgelegt ist, dass sie ein druckbares Bild darauf aufnehmen kann; und
wenigstens eine Sperrschicht, die an der genannten zweiten Oberfläche der genannten Druckschicht anliegt und so ausgelegt ist, dass sie die Permeation von Flüssigkeiten in das genannte Drucktuch über die genannte Druckschicht hinaus reduziert; wobei die genannte Sperrschicht ausgewählt ist aus der Gruppe bestehend aus Nylon, Polyester, Polyolefinen, Polyurethan, Ethylen/Propylen-Kautschuk, Fluorkohlenstoff-Kautschuk und Butylkautschuk; wobei die genannte Sperrschicht wenigstens einen Füllstoff in Form von Partikeln mit einem großen Aspektverhältnis von größer als 1 und im Wesentlichen parallel zur Oberfläche der genannten Sperrschicht ausgerichtet beinhaltet.

2. Drucktuch nach Anspruch 1, das ferner wenigstens eine Verstärkungsschicht über der genannten Basislage beinhaltet.

3. Drucktuch nach Anspruch 2, wobei die genannte Verstärkungsschicht Gewebe umfasst.

4. Drucktuch nach Anspruch 1, das ferner eine komprimierbare Schicht über der genannten Basislage beinhaltet.

5. Drucktuch nach Anspruch 1, wobei die genannte Sperrschicht mit einer Siliciumoxidschicht beschichtet wurde.

6. Drucktuch nach Anspruch 1, wobei der genannte Füllstoff aus Glimmer, Talk, Siliciumdioxid, Ton und Aluminiumoxid ausgewählt ist.

7. Drucktuch nach Anspruch 1, wobei der genannte Füllstoff mit einem Silan oder Fluorkohlenstoff beschichtet wurde.

8. Drucktuch nach Anspruch 1, wobei die genannte Sperrschicht ein absorptionsfähiges Material beinhaltet, das aus Siliciumdioxid, Aluminiumoxid, Ruß, Molekularsieben und Trocknungsmitteln ausgewählt ist.

9. Drucktuch nach Anspruch 1, wobei die genannte Sperrschicht eine komprimierbare Schicht umfasst, die chemisch behandelt wurde, um die Penetration von Flüssigkeiten durch sie zu verhüten.

10. Drucktuch nach Anspruch 9, wobei die genannte chemische Behandlung eine Fluorkohlenstoffbehandlung aufweist.

11. Drucktuch nach Anspruch 1, wobei die genannte Sperrschicht mit einem Metall beschichtet wurde.

12. Drucktuch nach Anspruch 1, das wenigstens zwei benachbarte Sperrschichten aufweist.

13. Drucktuch nach Anspruch 1, wobei die genannte Sperrschicht eine Dicke zwischen 0,05 mm und 0,38 mm (0,002 Zoll und 0,015 Zoll) aufweist.

## Revendications

1. Blanchet d'imprimerie comprenant :
au moins une couche de base ;
une couche d'impression au-dessus de ladite couche de base ayant une première surface et une deuxième surface, ladite première surface étant adaptée de façon à recevoir une image imprimable sur elle ; et
au moins une couche barrière positionnée contre ladite deuxième surface de ladite couche d'impression et adaptée de façon à réduire l'infiltration de liquides dans ledit blanchet d'impression au-delà de ladite couche d'impression ; ladite couche barrière étant sélectionnée parmi le groupe comprenant le nylon, le polyester, les polyoléfines, le polyuréthanne, le caoutchouc à l'éthylène-propylène, le caoutchouc synthétique fluorocarboné et le butylcaoutchouc ; dans lequel ladite couche barrière comprend au moins une charge à l'intérieur sous la forme de particules ayant un grand rapport de forme supérieur à 1 et orientées essentiellement parallèlement à la surface de ladite couche barrière.

2. Blanchet d'imprimerie selon la revendication 1, comprenant en outre au moins une couche de renforcement au-dessus de ladite couche de base.

3. Blanchet d'imprimerie selon la revendication 2, dans lequel ladite couche de renforcement comprend du tissu.

4. Blanchet d'imprimerie selon la revendication 1, comprenant en outre une couche compressible au-dessus de ladite couche de base.

5. Blanchet d'imprimerie selon la revendication 1, dans lequel ladite couche barrière a été revêtue d'une couche d'oxyde de silicium.

6. Blanchet d'imprimerie selon la revendication 1, dans lequel ladite charge est sélectionnée parmi le mica, le talc, la silice, l'argile et l'alumine.

7. Blanchet d'imprimerie selon la revendication 1, dans lequel ladite charge a été revêtue d'un silane ou de fluorocarbone.

8. Blanchet d'imprimerie selon la revendication 1, dans lequel ladite couche barrière comprend un matériau absorbant à l'intérieur, sélectionné parmi la silice, l'alumine, le noir de charbon, les tamis moléculaires et les desséchants.

9. Blanchet d'imprimerie selon la revendication 1, dans lequel ladite couche barrière comprend une couche compressible qui a été traitée chimiquement pour empêcher la pénétration de liquides à travers elle.

10. Blanchet d'imprimerie selon la revendication 9, dans lequel ledit traitement chimique comprend un traitement au fluorocarbone.

11. Blanchet d'imprimerie selon la revendication 1, dans lequel ladite couche barrière a été revêtue d'un métal.

12. Blanchet d'imprimerie selon la revendication 1, comprenant au moins deux couches barrières adjacentes.

13. Blanchet d'imprimerie selon la revendication 1, dans lequel ladite couche barrière a une épaisseur située entre 0,05 mm et 0,38 mm (0,002 pouces et 0,015 pouces).
